# EUROPEAN PATENT APPLICATION

(11) **EP 4 625 832 A1**
(43) Date of publication of application: **01.10.2025**
(21) Application number: 23917289.3
(22) Date of filing: 18.12.2023
(51) Int. Cl.: H04B 3/54

(54) **METHOD AND APPARATUS FOR POWER LINE COMMUNICATION**

(30) Priority: 16.01.2023 CN 202310107329
(71) Applicant: Huawei Technologies Co., Ltd., Shenzhen, Guangdong 518129 (CN)
(72) Inventor: LIN, Zefeng, Shenzhen, Guangdong 518129 (CN); PAN, Dao, Shenzhen, Guangdong 518129 (CN); KONG, Xuepeng, Shenzhen, Guangdong 518129 (CN)
(74) Representative: Gill Jennings & Every LLP
(86) International application number: PCT/CN2023/139432
(87) International publication number: WO 2024/152822

(57) **Abstract**

Embodiments of this application provide a power communication method. The method includes: A first node receives a first multicast frame. The first multicast frame includes multicast member information and a payload of a multicast member. The multicast member includes the first node. The first node sends response information. The response information is used to determine whether one or more units in the payload are correctly received. The first multicast frame received by the first node includes multicast member information. A multicast member includes the first node. The first node sends response information. The multicast member information is carried in the first multicast frame and sent to the first node. This avoids management frame overheads for establishment and maintenance of a multicast group, thereby reducing resource overheads for maintaining a multicast group member in a system.

## Description

This application claims priority to Chinese Patent Application No. 202310107329.7, filed with the China National Intellectual Property Administration on January 16, 2023 and entitled "POWER LINE COMMUNICATION METHOD AND APPARATUS", which is incorporated herein by reference in its entirety.

### TECHNICAL FIELD

Embodiments of this application relate to the communication field, and more specifically, to a power line communication method and apparatus.

### BACKGROUND

Power line communication: A power line communication (power line communication, PLC) technology is a communication manner for transmitting data and media signals by using power lines. Power line communication is also referred to as a power line network. Currently, the power line communication technology mainly includes IEEE 1901, Homeplug, ITU-T G.hn, and the like. An orthogonal frequency division multiplexing (orthogonal frequency division multiplexing, OFDM) modulation scheme is used in all the foregoing technologies. The orthogonal frequency division multiplexing modulation scheme helps ensure stable and complete data transmission in a communication environment with severe electromagnetic interference.

There may be three communication modes in the power line communication field: unicast, broadcast, and multicast. Multicast is a typical one-to-many communication mode, and is especially important in the Internet of things (Internet of Things) field. In an IoT scenario, there are usually a large quantity of nodes, and function attributes of different nodes are not completely consistent. The nodes usually appear in groups. For example, actions such as simultaneously controlling brightness changes of a plurality of LED lights and controlling music playback of a plurality of sound boxes are implemented. In this application scenario, multicast is a most appropriate and important communication means. The multicast mode is different from the unicast mode in which system bandwidth resources decrease due to repeated sending of packets with same content. In addition, a problem of additional retransmission or even a broadcast storm due to transmission of data packets to all nodes in a domain through broadcasting does not exist in the multicast mode. Data transmission can be performed based on any plurality of nodes in a network in the multicast mode.

In a conventional manner, an additional management frame needs to be sent for establishment and maintenance of a multicast group. In this case, resource overheads of a system are relatively large. Therefore, how to reduce resource overheads for maintenance of a multicast member in a system is a problem to be urgently resolved.

### SUMMARY

Embodiments of this application provide a power line communication method, to reduce resource overheads for maintenance of a multicast group member in a system, thereby saving resources.

According to a first aspect, a power line communication method is provided. The method includes: A first node receives a first multicast frame. The first multicast frame includes multicast member information and a payload of a multicast member. The multicast member includes the first node. The first node sends response information. The response information is used to determine whether one or more units in the payload are correctly received.

According to the method provided in this application, the first multicast frame includes the multicast member information. After receiving the first multicast frame, the first node determines, based on the multicast member information, that the multicast member includes the first node. The first node determines whether the payload that is of the multicast member and that is included in the first multicast frame is successfully received, and sends the response information. First, the multicast member information is carried in the first multicast frame and sent to the first node. This avoids management frame overheads for establishing and maintaining a multicast group, thereby reducing resource overheads for maintenance of a multicast group member in a system.

With reference to the first aspect, in some possible implementations, that the first node sends response information includes that the first node sends the response information at a first location. The first location is determined based on a location of the first node in the multicast member information.

It should be understood that the first location may include a location of a time domain resource and a location of a frequency domain resource. For example, the time domain resource may be a specific group or symbol, and the frequency domain resource may be a specific group or subcarrier.

The location of the time domain resource may be a location that is of a symbol and that is determined based on the first node, and the location of the frequency domain resource may be a location that is of a subcarrier and that is determined based on the first node.

Based on the foregoing technical solution, the first node determines the first location based on the location of the first node in the multicast member information, and sends the response information at the first location. The first node can quickly determine the first location for sending the response information, and make a response based on the one or more units in the payload, to improve responding efficiency and accuracy of the first node.

With reference to the first aspect, in some possible implementations, the multicast member information includes a bitmap, and a node number of the multicast member in the multicast member information corresponds to a first bit in the bitmap.

It should be understood that a node number of a multicast member is in a one-to-one correspondence with a bit in the bitmap. A value of a bit corresponding to a node number indicates whether a node corresponding to the node number is a member of the multicast group and whether response information needs to be sent for the first multicast frame.

With reference to the first aspect, in some possible implementations, when the first bit is a first value, the first node responds with acknowledgment information to the first multicast frame; and when the first bit is a second value, the first node does not respond to the first multicast frame.

With reference to the first aspect, in some possible implementations, the response information is carried on a first time domain resource, and the first time domain resource includes one or more symbols used for channel estimation and one or more symbols used for responding.

With reference to the first aspect, in some possible implementations, the response information is on a first response unit, the first response unit includes a plurality of subcarriers, the plurality of subcarriers correspond to M groups of comb subcarriers or M groups of consecutive subcarriers, and the response information corresponds to one group of subcarriers in the M groups of comb subcarriers or one group of subcarriers in the M groups of consecutive subcarriers.

It should be understood that the M groups of comb subcarriers mean that subcarriers included in each of the M groups are comb subcarriers. The M groups of consecutive subcarriers mean that subcarriers included in each of the M groups are consecutive subcarriers.

With reference to the first aspect, in some possible implementations, the multicast member information includes K pieces of member information, where K is a positive integer, the K pieces of member information are divided into L groups, L=ceil (K/M), and ceil (*) represents rounding up.

It should be understood that when there are K multicast members, the K multicast members are divided into the L groups based on the M groups of comb subcarriers included in the frequency domain resource.

With reference to the first aspect, in some possible implementations, the first location corresponds to an i^{th} group of time domain resources on time domain resources, the first location corresponds to a j^{th} group of frequency domain resources on frequency domain resources, the first node is an a^{th} node in a multicast group, and that the first node sends the response information at a first location includes that the first node sends the response information on the i^{th} group of time domain resources and the j^{th} group of frequency domain resources in the first multicast frame, where a is a positive integer, i=floor (a/M), j=mod (a, M), floor represents rounding down, and mod represents modulo.

According to a second aspect, a power line communication method is provided. The method includes: A second node sends a first multicast frame. The first multicast frame includes multicast member information and a payload of a multicast member. The multicast member includes a first node. The second node receives response information of the first node. The response information is used to determine whether one or more units in the payload are correctly received by the first node.

According to the method provided in this application, the first multicast frame sent by the second node includes the multicast member information. After receiving the first multicast frame, the first node determines that the first node is a multicast member, and the first node sends the response information to the second node. The second node adds the multicast member information to the first multicast frame and sends the first multicast frame to the first node. This avoids separate establishment and maintenance performed by using additional management frames, thereby reducing resource overheads for maintenance of a multicast group member in a system.

With reference to the second aspect, in some possible implementations, that the second node receives response information includes that the second node receives the response information at a first location. The first location is determined based on a location of the first node in the multicast member information.

It should be understood that the first location may include a location of a time domain resource and a location of a frequency domain resource. For example, the time domain resource may be a specific group or symbol, and the frequency domain resource may be a specific group or subcarrier.

The location of the time domain resource may be a location that is of a symbol and that is determined based on the first node, and the location of the frequency domain resource may be a location that is of a subcarrier and that is determined based on the first node.

Based on the foregoing technical solution, the second node receives the response information of the first node at the first location. The first node can quickly determine the first location based on the location of the first node in the multicast member information, to improve overall responding efficiency and accuracy of the system.

With reference to the second aspect, in some possible implementations, the multicast member information includes a bitmap, and a node number of the multicast member in the multicast member information corresponds to a first bit in the bitmap.

With reference to the second aspect, in some possible implementations, when the first bit is a first value, the second node receives the response information of the first node for the first multicast frame.

With reference to the second aspect, in some possible implementations, the response information is carried on a first time domain resource, and the first time domain resource includes one or more symbols used for channel estimation and one or more symbols used for responding.

With reference to the second aspect, in some possible implementations, the response information is on a first response unit, the first response unit includes a plurality of subcarriers, the plurality of subcarriers correspond to M groups of comb subcarriers or M groups of consecutive subcarriers, and the response information is correspondingly carried on one group of subcarriers in the M groups of comb subcarriers or one group of subcarriers in the M groups of consecutive subcarriers.

It should be understood that the M groups of comb subcarriers mean that subcarriers included in each of the M groups are comb subcarriers. The M groups of consecutive subcarriers mean that subcarriers included in each of the M groups are consecutive subcarriers.

With reference to the second aspect, in some possible implementations, the multicast member information includes K pieces of member information, where K is a positive integer, the K pieces of member information are divided into L groups, L=ceil (K/M), and ceil (*) represents rounding up.

With reference to the second aspect, in some possible implementations, the first location corresponds to an i^{th} group of time domain resources on time domain resources, the first location corresponds to a j^{th} group of frequency domain resources on frequency domain resources, the first node is an a^{th} node in a multicast group, and that the second node receives the response information at a first location includes that the second node receives the response information on the i^{th} group of time domain resources and the j^{th} group of frequency domain resources in the first multicast frame, where a is a positive integer, i=floor (a/M), j=mod (a, M), floor represents rounding down, and mod represents modulo.

According to a third aspect, a power line communication apparatus is provided. The apparatus includes: a transceiver unit, configured to receive a first multicast frame. The first multicast frame includes multicast member information and a payload of a multicast member. The multicast member includes a first node. The transceiver unit is configured to send response information. The response information is used to determine whether one or more units in the payload are correctly received.

With reference to the third aspect, in some possible implementations, that the transceiver unit is configured to send the response information includes that the transceiver unit is configured to send the response information at a first location. The first location is determined based on a location of the first node in the multicast member information.

With reference to the third aspect, in some possible implementations, in some possible implementations, the multicast member information includes a bitmap, and a node number of the multicast member in the multicast member information corresponds to a first bit in the bitmap.

With reference to the third aspect, in some possible implementations, when the first bit is a first value, the first node responds with acknowledgment information to the first multicast frame; and when the first bit is a second value, the first node does not respond to the first multicast frame.

With reference to the third aspect, in some possible implementations, the response information is carried on a first time domain resource, and the first time domain resource includes one or more symbols used for channel estimation and one or more symbols used for responding.

With reference to the third aspect, in some possible implementations, the response information is on a first response unit, the first response unit includes a plurality of subcarriers, the plurality of subcarriers correspond to M groups of comb subcarriers or M groups of consecutive subcarriers, and the response information is carried on one group of subcarriers in the M groups of comb subcarriers or one group of subcarriers in the M groups of consecutive subcarriers.

With reference to the third aspect, in some possible implementations, the multicast member information includes K pieces of member information, where K is a positive integer, the K pieces of member information are divided into L groups, L=ceil (K/M), and ceil (*) represents rounding up.

With reference to the third aspect, in some possible implementations, the first location corresponds to an i^{th} group of time domain resources on time domain resources, the first location corresponds to a j^{th} group of frequency domain resources on frequency domain resources, the first node is an a^{th} node in a multicast group, and that the first node sends the response information at the first location includes that the first node sends the response information on the i^{th} group of time domain resources and the j^{th} group of frequency domain resources in the first multicast frame, where a is a positive integer, i=floor (a/M), j=mod (a, M), floor represents rounding down, and mod represents modulo.

According to a fourth aspect, a power line communication apparatus is provided. The apparatus includes: a transceiver unit, configured to send a first multicast frame. The first multicast frame includes multicast member information and a payload of a multicast member. The multicast member includes a first node. The transceiver unit is configured to receive response information of the first node. The response information is used to determine whether one or more units in the payload are correctly received by the first node.

With reference to the fourth aspect, in some possible implementations, that the transceiver unit is configured to receive the response information includes that the transceiver unit receives the response information at a first location. The first location is determined based on a location of the first node in the multicast member information.

With reference to the fourth aspect, in some possible implementations, the multicast member information includes a bitmap, and a node number of the multicast member in the multicast member information corresponds to a first bit in the bitmap.

With reference to the fourth aspect, in some possible implementations, when the first bit is a first value, the second node receives the response information of the first node for the first multicast frame.

With reference to the fourth aspect, in some possible implementations, the response information is carried on a first time domain resource, and the first time domain resource includes one or more symbols used for channel estimation and one or more symbols used for responding.

With reference to the fourth aspect, in some possible implementations, the response information is on a first response unit, the first response unit includes a plurality of subcarriers, the plurality of subcarriers correspond to M groups of comb subcarriers or M groups of consecutive subcarriers, and the response information is carried on one group of subcarriers in the M groups of comb subcarriers or one group of subcarriers in the M groups of consecutive subcarriers.

With reference to the fourth aspect, in some possible implementations, the multicast member information includes K pieces of member information, where K is a positive integer, the K pieces of member information are divided into L groups, L=ceil (K/M), and ceil (*) represents rounding up.

With reference to the fourth aspect, in some possible implementations, the first location corresponds to an i^{th} group of time domain resources on time domain resources, the first location corresponds to a j^{th} group of frequency domain resources on frequency domain resources, the first node is an a^{th} node in a multicast group, and that the second node receives the response information at the first location includes that the second node receives the response information on the i^{th} group of time domain resources and the j^{th} group of frequency domain resources in the first multicast frame, where a is a positive integer, i=floor (a/M), j=mod (a, M), floor represents rounding down, and mod represents modulo.

According to a fifth aspect, a power line communication apparatus is provided. The apparatus is configured to perform the method provided in the first aspect and/or the second aspect. Specifically, the apparatus may include units and/or modules configured to perform the method provided in any one of the foregoing implementations of the first aspect and the second aspect, for example, a processing unit and/or a transceiver unit (or referred to as a communication unit).

In an implementation, the apparatus is a communication device (for example, a terminal device or a network device). When the apparatus is the communication device, the communication unit may be a transceiver or a transceiver unit, or an input/output interface; and the processing unit may be at least one processor. Optionally, the transceiver may be a transceiver circuit. Optionally, the input/output interface may be an input/output circuit.

In another implementation, the apparatus is a chip, a chip system, or a circuit used in a communication device (for example, a terminal device or a network device). When the apparatus is a chip, a chip system, or a circuit used in a communication device, the communication unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

According to a sixth aspect, a communication apparatus is provided. The apparatus includes: a memory, configured to store a program; and at least one processor, configured to execute a computer program or instructions stored in the memory, to perform the method provided in any one of the foregoing implementations of the first aspect and the second aspect.

In an implementation, the apparatus is a communication device (for example, a terminal device or a network device).

In another implementation, the apparatus is a chip, a chip system, or a circuit used in a communication device (for example, a terminal device or a network device).

According to a seventh aspect, this application provides a processor, and the processor is configured to perform the methods provided in the foregoing aspects.

Operations such as sending and obtaining/receiving related to the processor may be understood as operations such as output and input of the processor, or operations such as sending and receiving performed by a radio frequency circuit and an antenna, unless otherwise specified, or provided that the operations do not contradict actual functions or internal logic of the operations in related descriptions. This is not limited in this application.

According to an eighth aspect, a computer-readable storage medium is provided. The computer-readable storage medium stores program code executed by a device, and the program code includes the method provided in any one of the foregoing implementations of the first aspect and the second aspect.

According to a ninth aspect, a computer program product including instructions is provided. When the computer program product runs on a computer, the computer is enabled to perform the method provided in any one of the foregoing implementations of the first aspect and the second aspect.

According to a tenth aspect, a chip is provided. The chip includes a processor and a communication interface, and the processor reads, through the communication interface, instructions stored in a memory, to perform the method provided in any one of the foregoing implementations of the first aspect and the second aspect.

Optionally, in an implementation, the chip further includes the memory. The memory stores a computer program or the instructions. The processor is configured to execute the computer program or the instructions stored in the memory. When the computer program or the instructions are executed, the processor is configured to perform the method provided in any one of the foregoing implementations of the first aspect and the second aspect.

### BRIEF DESCRIPTION OF DRAWINGS

FIG. 1 is a diagram of a PLC network structure;
FIG. 2 is a diagram of a structure of a multicast transmission mechanism based on slot division according to an embodiment of this application;
FIG. 3 is a diagram of a structure of another multicast transmission mechanism based on slot division according to an embodiment of this application;
FIG. 4 is a schematic flowchart of a power line communication method according to an embodiment of this application;
FIG. 5 is a diagram of a structure of still another multicast reply mechanism according to an embodiment of this application;
FIG. 6 is a diagram of frequency domain resource division according to an embodiment of this application;
FIG. 7 is a diagram of a time-frequency resource division manner according to an embodiment of this application;
FIG. 8 is a diagram of a structure of a power line communication apparatus according to an embodiment of this application; and
FIG. 9 is a diagram of a structure of another power line communication apparatus according to an embodiment of this application.

### DESCRIPTION OF EMBODIMENTS

The following describes technical solutions of embodiments in this application with reference to accompanying drawings.

In addition to a power communication system, a multicast communication method provided in embodiments of this application may be further applied to various wireless communication solutions for communication, for example, a wireless fidelity (wireless fidelity, Wi-Fi) network. The method provided in embodiments of this application may be further applied to a future communication system. This is not limited in this application.

For case of understanding of embodiments of this application, the following briefly describes several basic concepts in embodiments of this application.

### 1. Power line communication

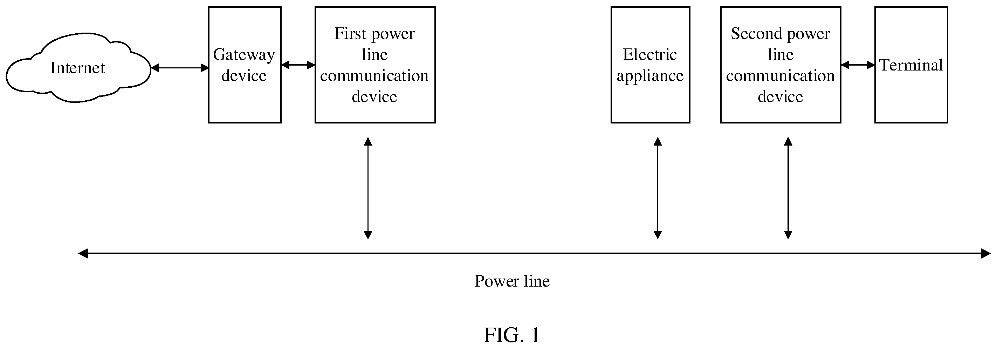

A PLC network is also referred to as a power line communication network, and is a network for implementing data communication between different nodes by using a power line as a communication medium. An example PLC communication system may have an architecture shown in FIG. 1. As shown in FIG. 1, the power line communication system may include a power line, a gateway device, a plurality of power line communication devices, and a network-connected device such as a terminal. The power line is configured to transmit a current and drive an electric appliance. In addition, the power line is connected to the Internet through the gateway device, and the power line can also be used to provide access to the Internet. A power line communication device may include a gateway-side power line communication device (for example, a first power line communication device shown in FIG. 1). The gateway-side power line communication device is connected to the gateway device. The power line communication device may further include a terminal-side power line communication device (for example, a second power line communication device shown in FIG. 1) that is configured to provide a network signal for the network-connected device such as a terminal. The foregoing power line communication device may be specifically a PLC modem (modern) or another type of power line communication modem. The PLC modem is a modem that implements broadband network access through the power line. A network is formed by using an existing power line and socket in a home or an office to connect to a terminal, for example, a broadband network access device (such as an ADSL modem), a set-top box, an audio device, a monitoring device, and another smart electrical device, to transmit data, voice, and videos. The PLC modem has a plug-and-play feature and can transmit a network IP digital signal over a common home power line.

When sending data from the Internet to a terminal, the first power line communication device may receive, from the gateway device, the data from the Internet. The first power line communication device may further modulate the data from the gateway to a PLC signal and couple the PLC signal to the power line, so that the data can be forwarded over the power line. The second power line communication device may be configured to demodulate the PLC signal transmitted over the power line to obtain the data, and forward, in a wireless manner or in another manner, the data obtained through demodulation to the terminal, so that user equipment such as a terminal receives data from the Internet side. Similarly, the system shown in FIG. 1 may also implement data transmission from the terminal to the Internet side.

The foregoing power line communication device may be specifically a PLC modem or another type of power line communication modem. This is not specifically limited in this application.

Currently, when the first power line communication device and/or the second power line communication device shown in FIG. 1 sends data, the first power line communication device and/or the second power line communication device adds a to-be-sent data packet to a signal frame, modulates a signal into an orthogonal frequency division multiplexing (orthogonal frequency division multiplexing, OFDM) symbol sequence, and further sends the OFDM symbol sequence by using a first frequency band signal and/or a second frequency band signal. Correspondingly, after receiving the OFDM symbol sequence that is transmitted over the power line by using the first frequency band signal and/or the second frequency band signal, a power line communication device at a receiving end may obtain the signal frame through demodulation, and may further parse out the data packet based on the signal frame.

2. There are three communication modes in the power line communication field: unicast, broadcast, and multicast. Unicast is a "one-to-one" communication mode used between two hosts: a source host and a destination host. Broadcast is a communication mode used between a source host and all other hosts in a network.

Multicast: Multicast is also referred to as multi-target broadcast and multicast. Multicast is a commonly used transmission mode in a network. Multicast allows a message to be transmitted to a selected subset of all possible destinations, that is, information to be transmitted to a plurality of specified addresses.

Multicast is a typical one-to-many communication mode, and is especially important in the Internet of things (Internet of Things) field. In an IoT scenario, there is usually a large quantity of nodes, and function attributes of different nodes are not completely consistent. The nodes usually appear in groups. For example, actions such as simultaneously controlling brightness changes of a plurality of LED lights and controlling music playback of a plurality of sound boxes are implemented. In this application scenario, multicast is a most appropriate and important communication means. The multicast mode is different from the unicast mode in which system bandwidth resources decrease due to repeated sending of packets with same content. In addition, a problem of additional retransmission or even a broadcast storm due to transmission of data packets to all nodes in a domain through broadcasting does not exist in the multicast mode. Data is transmitted to any plurality of nodes in the domain in the multicast mode.

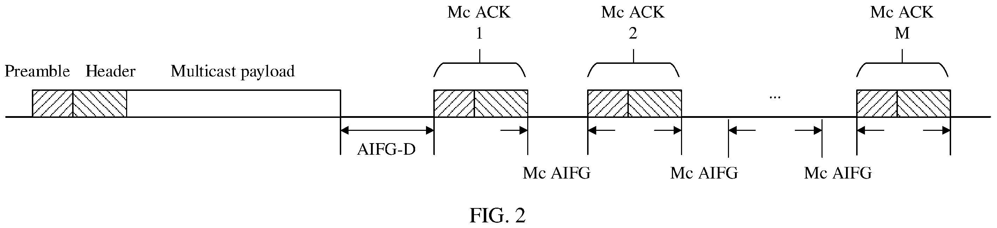

A multicast transmission mechanism is defined based on slot division according to a related protocol (for example, the G.hn protocol). FIG. 2 shows a multicast transmission mechanism based on slot division according to this application. There are several acknowledgment slots (Mc-ACK frame slots) after a multicast frame with a request acknowledgment response. These Mc-ACK frame slots are uniquely assigned to single destination nodes of a multicast group. After receiving the multicast frame, these destination nodes send Mc-ACKs in these slots for information reply (which may also be referred to as a response or an information response).

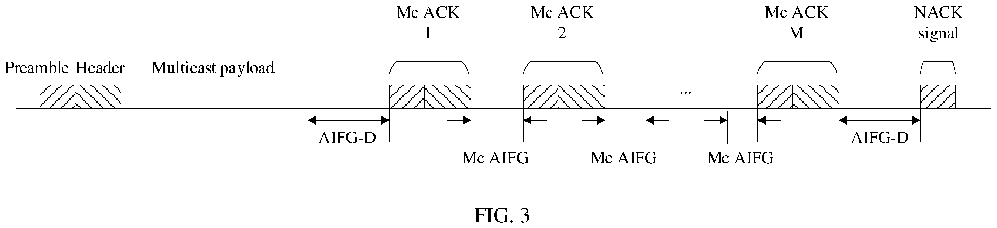

FIG. 2 shows an ACK reply mechanism in the multicast transmission mechanism. FIG. 3 shows another multicast transmission mechanism based on slot division. The multicast transmission mechanism includes a NACK reply mechanism. In comparison with FIG. 2, an additional NACK signaling slot is added after Mc-ACK frame slots in FIG. 3.

It should be understood that, for a destination node that is in a multicast group and to which a slot for responding with an Mc-ACK frame is not assigned, if the destination node receives at least one Mc-ACK frame but has not received an original multicast frame corresponding to the Mc-ACK frame, the destination node can send a NACK signal in the NACK slot to indicate that the multicast group of the destination node fails in reception in this time.

In the multicast transmission mechanisms based on slot division shown in FIG. 2 and FIG. 3, there is a problem of insufficient acknowledgment information reply accuracy of a node. Mc-ACK frame slots are assigned to only some nodes in the multicast group. The nodes to which the Mc-ACK frame slots are allocated can accurately make replies based on fragments. For a network with a large quantity of nodes (for example, an IoT scenario), a quantity of McACK frame slots in the multicast group is obviously insufficient. In other words, some nodes in the network cannot make information responses in Mc-ACK frame slots, causing the problem of insufficient acknowledgment information responding accuracy of a destination node in the network. In addition, a node to which an Mc-ACK frame slot in the network is not assigned notifies, by using a NACK signal, a sending node sending a multicast frame of failed reception. Once receiving the NACK signal, the sending node of the multicast frame cannot accurately learn of a specific node that is in the domain of the multicast group and that fails in reception, that is, cannot determine information about a node that fails in reception.

In a conventional manner, an additional management frame needs to be sent for maintenance of the multicast group, and the management frame is separately established and maintained, causing a problem of large resource overheads for maintenance of a multicast group member in the system.

For the foregoing existing technical problem, an embodiment of this application provides a power line communication method. In the method, a case in which a system separately sends a management frame for establishment and maintenance of multicast member information can be avoided, thereby greatly reducing resource overheads and saving resources.

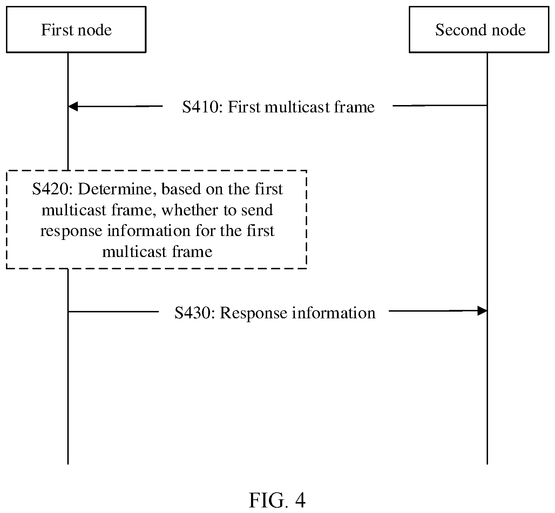

FIG. 4 is a schematic flowchart of a power communication method 400 according to an embodiment of this application. In the method shown in FIG. 4, for example, a receiving end, that is, an intra-domain subnode (an ordinary node), is a first node, and a transmitting end, that is, an intra-domain master node is a second node, to describe in detail the power communication method provided in this application. This application is not limited thereto.

As shown in FIG. 4, the method includes the following steps:
S410: A first node receives a first multicast frame.

The first multicast frame includes multicast member information and a payload of a multicast member.

It should be understood that the multicast group member information may be information indication information of the multicast member, so that the first node can directly obtain information related to a node in a multicast group from a multicast frame header at a physical layer.

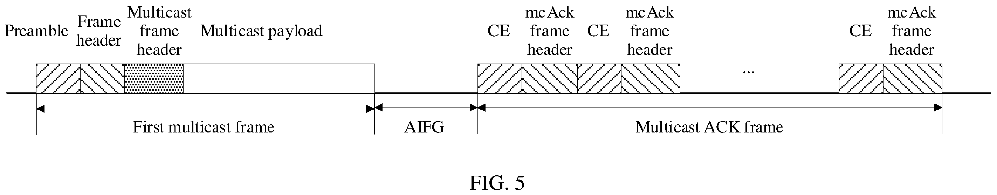

For example, FIG. 5 is a diagram of a structure of a multicast reply mechanism according to an embodiment of this application. As shown in FIG. 5, the first multicast frame slot includes a preamble, a frame header, a multicast frame header, and a multicast payload (or referred to as a payload). It can be learned that, in addition to the payload, in the first multicast frame, the multicast member information corresponding to the multicast frame is further carried in the multicast frame header in the first multicast frame and transmitted to a receiving node (for example, the first node).

In the diagram of the structure shown in FIG. 5, a structure of the multicast frame further includes an AIFG duration and a multicast ACK frame. The AIFG duration indicates that after the first node receives the first multicast frame, information responding is further performed for the first multicast frame after the AIFG duration.

For example, when the AIFG duration is 122.88 µs, after receiving the first multicast frame, the first node determines that the multicast member information in the first multicast frame includes the first node, and the first node responds with information to the multicast message after 122.88 µs.

Optionally, in the method shown in FIG. 4, the method may further include:
S420: The first node determines, based on the first multicast frame, whether to send response information for the first multicast frame.

Specifically, after receiving the first multicast frame, the first node determines, based on the multicast member information included in the first multicast frame, whether to send the response information for the first multicast frame.

In a possible implementation, the multicast member information in the first multicast frame has a plurality of forms (for example, a bitmap form). To be specific, the multicast member information includes a bitmap, and a node number of the multicast member in the multicast member information corresponds to a first bit in the bitmap.

It should be understood that, when the first bit is a first value, the first node responds with acknowledgment information to the first multicast frame; and when the first bit is a second value, the first node does not respond to the first multicast frame.

When the first bit is the first value, it indicates that the first node is a multicast member in the first multicast frame, and the first node needs to send the response information for the first multicast frame. When the first bit is the second value, it indicates that the first node is not a multicast member in the first multicast frame, and the first node does not need to respond to the first multicast frame.

It should be understood that each intra-domain member has a clear and unique node number (device ID, DID) indication. According to a related protocol, a DID range is (0-250), and the node number DID can be represented by using 8 bits. The intra-domain member indicates each device node in the current domain. The multicast group member may indicate an ordinary node device corresponding to the current multicast frame. In other words, the multicast group member may include only some of intra-domain members. The multicast frame header carries a number indication of a member in the multicast group in a bit mapping form. To be specific, 250 bits are used to represent a target node of the multicast message, and each bit is in a one-to-one correspondence with a node corresponding to a node number DID corresponding to a bit location.

It should be further understood that the transmitting end (referred to as the second node in this embodiment of this application) of the first multicast frame may set, to 1, a bit corresponding to a node number DID of a member in the multicast group, and set, to 0, a bit corresponding to a node number DID of a member not in the multicast group. Alternatively, the transmitting end of the first multicast frame may set, to 0, a bit corresponding to a node number DID of a member in the multicast group, and set, to 1, a bit corresponding to a node number DID of a member not in the multicast group. This is not limited in this application.

For example, it is assumed that the transmitting end of the first multicast frame may set, to 1, a bit corresponding to a node number DID of a member in the multicast group, and set, to 0, a bit corresponding to a node number DID of a member not in the multicast group. As shown in Table 1, content in the current multicast frame header includes bits 1 corresponding to only DIDs 2, 3, 248, and 249. This may be understood as that destination nodes of the current first multicast frame are intra-group members whose intra-domain node numbers DIDs are 2, 3, 248, and 249. The intra-group members of the intra-domain node numbers DIDs=2, 3, 248, and 249 are used as the destination nodes. The response information needs to be sent after the first multicast frame is received. If bits corresponding to node numbers DIDs: 0, 1, 247, and 250 are 1, devices corresponding to the DIDs=0, 1, 247, and 250 do not need to process the first multicast frame.

**Table 1**

| | | | | | | | | | |
|---|---|---|---|---|---|---|---|---|---|
| Bit | 0 | 1 | 2 | 3 | ... | 247 | 248 | 249 | 250 |
| Value | 0 | 0 | 1 | 1 | ... | 0 | 1 | 1 | 0 |

S430: The first node sends the response information.

Specifically, the first node receives the first multicast frame, and determines, based on the multicast member information in the first multicast frame, that the first node belongs to the multicast member. The first node sends the response information based on the first multicast frame. The response information is used to determine whether one or more units in the payload of the multicast member are correctly received.

In a possible implementation, the response information is carried on a first time domain resource, and the first time domain resource includes one or more symbols used for channel estimation and one or more symbols used for responding.

It should be understood that the response information includes Ns consecutive time domain symbols on time domain resources. The response information is carried on the first time domain resource. The first time domain resource may include N1 symbols used for channel estimation and N2 symbols used for responding. Uplink channel estimation can be performed by using the N1 symbols used for channel estimation, for example, a CE symbol shown in FIG. 5. Acknowledgment information reply can be performed by using the N2 symbols used for responding, for example, a multicast ACK header (McACK-Header) symbol shown in FIG. 5. Ns=N1+N2, where Ns, N1, and N2 are all positive integers.

It should be further understood that the CE symbol and the McACK-Header symbol shown in FIG. 5 are merely examples, and the symbol used for channel estimation and the symbol used for responding may alternatively be other symbols. This is not specifically limited in this application.

In another possible implementation, the response information is on a first response unit, the first response unit is carried on a plurality of subcarriers, the plurality of subcarriers correspond to M groups of comb subcarriers or M groups of consecutive subcarriers, and the response information is carried on one group of subcarriers in the M groups of comb subcarriers or one group of subcarriers in the M groups of consecutive subcarriers.

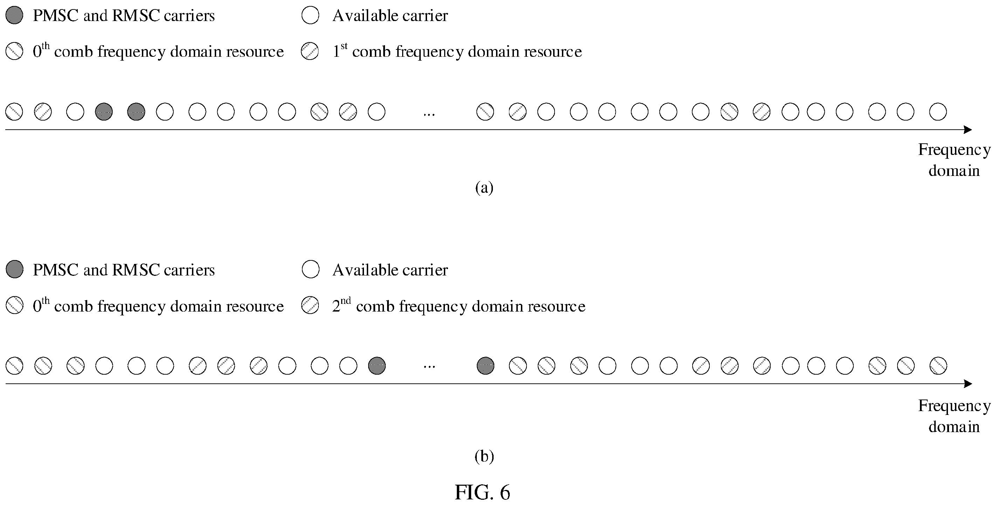

It should be understood that available subcarriers of symbols of the multicast ACK frame on frequency domain resources are divided into M comb subcarriers, and M users share one group of subcarriers. For example, FIG. 6 is a diagram of frequency domain resource division according to an embodiment of this application.

In an example, as shown in (a) in FIG. 6, available frequency domain subcarriers are divided into M=8 groups of comb subcarriers, and a p^{th} group of frequency domain comb resources should include a q^{th} available subcarrier, where q should satisfy mod (q, M)=p, and mod represents modulo. Herein, 0 ≤ p ≤ M - 1, 0 ≤ q ≤ Nᵤₛₑ, and Nᵤₛₑ is a quantity of available subcarriers.

In another example, as shown in (b) in FIG. 6, available frequency domain subcarriers are divided into M=4 groups of comb subcarriers, and each comb frequency domain resource may occupy N_{sc} = 3 consecutive subcarriers. A p^{th} group of frequency domain comb resources should include a q^{th} available subcarrier, where q should satisfy floor (mod (q, N_{sc}*M)/M)=p, floor represents rounding down, and mod represents modulo. Herein, 0 ≤ p ≤ M - 1, 0 ≤ q ≤ Nᵤₛₑ, and Nᵤₛₑ is a quantity of available subcarriers.

In another possible implementation, subcarriers in a group in subcarrier groups may be consecutive. In an example, the first response unit includes Nᵤₛₑ=M*S available subcarriers, and corresponds to M groups of frequency domain resources. Each group of frequency domain resources includes S subcarriers, and an i^{th} group of frequency domain resources includes S consecutive available subcarriers from an (i*S)^{th} available subcarrier to an ((i+1)*S-1)^{th} available subcarrier.

It should be understood that, when the multicast member information includes K pieces of member information, the K members are divided into L groups, where K is a positive integer, L=ceil (K/M), and ceil (*) represents rounding up.

Ns consecutive time domain symbols on time domain resources are occupied for members in each of the L groups. Comb resources on frequency domain resources are allocated to M members in each group.

In an example, when a plurality of subcarriers in frequency domain resources include four groups of comb subcarriers, and the multicast member information includes 21 pieces of member information, the 21 members are divided into L groups, where L=ceil (21/4)=6. To be specific, the 21 members are divided into six groups, each of the first five groups includes four members, and the fifth group includes one member.

In a possible implementation, the first node sends the response information at a first location. The first location is determined based on a location of the first node in the multicast member information.

In an example, it is assumed that in node numbers DIDs, bits corresponding to a first node number DID, a third node number DID, a fourth node number DID, and a fifth node number DID are a first value, and a bit corresponding to a second node number DID is a second value. It indicates that members corresponding to the first node number DID, the third node number DID, the fourth node number DID, and the fifth node number DID are multicast group members in this time. A location of a node corresponding to the first node number DID in multicast members is 1, that is, a first node in the multicast group. A location of a node corresponding to the third node number DID in the multicast members is 2, that is, a second node in the multicast group. A location of a node corresponding to the fourth node number DID in the multicast members is 3, that is, a third node in the multicast group. A location of a node corresponding to the fifth node number DID in the multicast members is 4, that is, a fourth node in the multicast group. For example, a first location at which the node corresponding to the third node number DID sends response information is determined based on the location 2 of the node in the multicast members.

In another possible implementation, the first location at which the first node sends the response information may be determined based on a time-frequency location (i, j). The first location corresponds to an i^{th} group of time domain resources on time domain resources. The first location corresponds to a j^{th} group of frequency domain resources on frequency domain resources. The first node is an a^{th} node in the multicast group. The first node sends the response information on the i^{th} group of time domain resources and the j^{th} group of frequency domain resources in the first multicast frame, where a is a positive integer, i=floor (a/M), j=mod (a, M), floor represents rounding down, and mod represents modulo.

In an example, after receiving the first multicast frame, each destination node in the multicast group parses the multicast frame header in the first multicast frame to determine whether the node needs to reply to the first multicast frame. If it is determined that the node needs to reply to the first multicast frame, it is determined, according to a node number DID order based on the multicast member information carried in the multicast frame header, that the node is the a^{th} member in the multicast group, and the node responds with the acknowledgment information at the first location corresponding to the node.

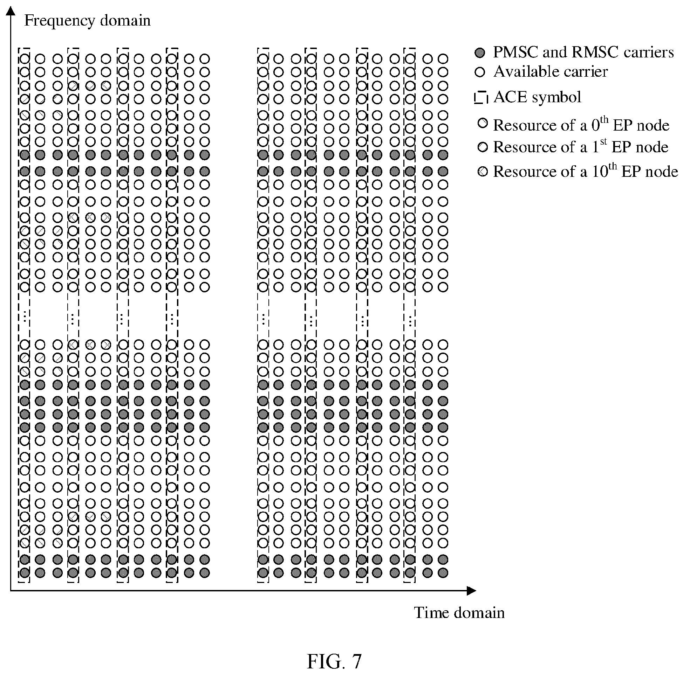

Optionally, frames corresponding to pieces of response information should be adjacently transmitted, and there is no gap between different frames. For example, FIG. 7 is a diagram of a time-frequency resource division manner according to an embodiment of this application. As shown in FIG. 7, for example, K=8 and Ns=3. In this case, a time-frequency resource division manner provided in this embodiment of this application is described in detail. Herein, K=8 indicates that eight members share all available subcarrier resources in frequency domain resources in a comb form, Ns=3 indicates that three time domain symbols are occupied on time domain resources, N₁=1 symbol is used for channel estimation, and N₂=2 symbols are used for responding. For the multicast members, a 0^{th} member needs to send response information on a (0, 0) time-frequency resource, that is, the 0^{th} member sends the response information on a 0^{th} group of time domain symbols and a 0^{th} comb frequency domain resource; and a 10^{th} member needs to send response information on a (1, 2) time-frequency resource, that is, send the response information on a 1^{st} group of time domain symbols and a 2^{nd} comb frequency domain resource.

PMSC and RMSC shown in FIG. 7 are unavailable subcarriers.

According to the method shown in FIG. 4 to FIG. 7, in the power line communication method provided in this application, the first multicast frame sent by the second node to the first node includes the multicast member information, and the first node determines, based on the multicast member information, whether the first node needs to respond to the first multicast frame. The multicast member information is carried in the first multicast frame and sent to the first node, thereby avoiding information exchange of additional signaling and management frames and reducing resource overheads. In addition, the first node can quickly determine, based on the multicast member information, the first location for sending the response information, thereby further improving overall responding efficiency and accuracy of the system.

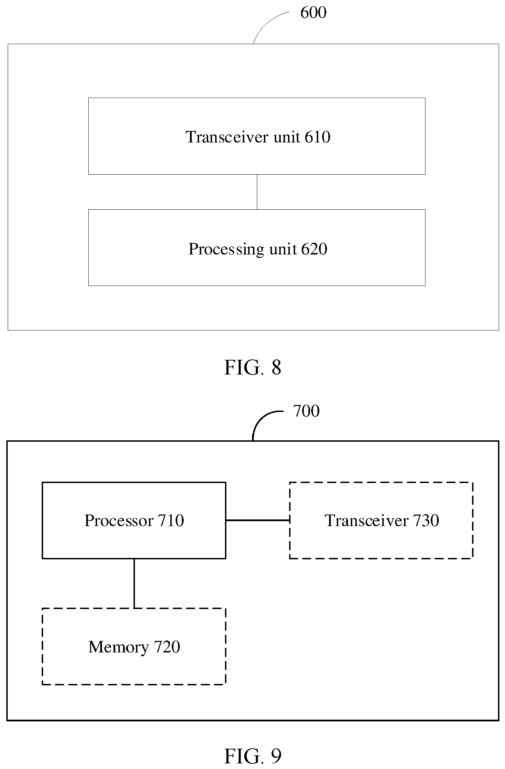

The foregoing describes in detail the power communication method in embodiments of this application with reference to FIG. 4 to FIG. 7. The following describes in detail a power communication apparatus provided in embodiments of this application with reference to FIG. 8 and FIG. 9. It should be understood that descriptions of apparatus embodiments correspond to the descriptions of the method embodiments. Therefore, for content that is not described in detail, refer to the foregoing method embodiments. For brevity, a part of the content is not described again.

FIG. 8 is a block diagram of a power communication apparatus according to an embodiment of this application. The apparatus 600 includes a transceiver unit 610 and a processing unit 620. The transceiver unit 610 may be configured to implement a corresponding communication function. The transceiver unit 610 may also be referred to as a communication interface or a communication unit. The processing unit 620 may be configured to implement a corresponding processing function, for example, modifying an address.

Optionally, the apparatus 600 further includes a storage unit. The storage unit may be configured to store instructions and/or data. The processing unit 620 may read the instructions and/or the data in the storage unit, so that the apparatus implements actions of the device or the network element in the foregoing method embodiments.

Optionally, the apparatus 600 may further include a processing unit 620, and the processing unit 620 may be configured to perform data processing.

Optionally, the apparatus 600 further includes a storage unit. The storage unit may be configured to store instructions and/or data. The processing unit 620 may read the instructions and/or the data in the storage unit, so that the apparatus implements actions of different terminal devices in the foregoing method embodiments, for example, actions of a first node.

The apparatus 600 may be configured to perform an action performed by the first node or the second node in the foregoing method embodiments. In this case, the apparatus 600 may be the first node or the second node, or a component of the first node or the second node. The transceiver unit 610 is configured to perform related operations of receiving and sending of the first node or the second node in the foregoing method embodiments. The processing unit 620 is configured to perform related operations of processing of the first node or the second node in the foregoing method embodiments.

It should be further understood that the apparatus 600 herein is embodied in a form of a functional unit. The term "unit" herein may indicate an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 600 may be specifically the first node or the second node in the foregoing embodiments, and may be configured to perform procedures and/or steps corresponding to the first node or the second node in the foregoing method embodiments; or the apparatus 600 may be specifically the first node or the second node in the foregoing embodiments, and may be configured to perform procedures and/or steps corresponding to the first node or the second node in the foregoing method embodiments. To avoid repetition, details are not described herein again.

The apparatus 600 in each of the foregoing solutions has a function of implementing corresponding steps performed by the first node or the second node in the foregoing methods, or the apparatus 600 in each of the foregoing solutions has a function of implementing corresponding steps performed by the first node or the second node in the foregoing methods. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver), and another unit, for example, the processing unit, may be replaced by a processor, to separately perform sending and receiving operations and a related processing operation in the method embodiments.

In addition, the transceiver unit 610 may alternatively be a transceiver circuit (for example, may include a receiving circuit and a sending circuit), and the processing unit may be a processing circuit.

It should be noted that the apparatus in FIG. 8 may be the second node (domain master node) or the first node (ordinary node) in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 9 is a block diagram of another power line communication apparatus according to an embodiment of this application. The apparatus 700 includes a processor 710. The processor 710 is configured to execute a computer program or instructions stored in a memory 720, or read data/signaling stored in a memory 720, to perform the methods in the foregoing method embodiments. Optionally, there are one or more processors 710.

Optionally, as shown in FIG. 9, the apparatus 700 further includes the memory 720, and the memory 720 is configured to store the computer program or the instructions and/or the data. The memory 720 may be integrated with the processor 710, or may be disposed separately. Optionally, there are one or more memories 720.

Optionally, as shown in FIG. 9, the apparatus 700 further includes a transceiver 730, and the transceiver 730 is configured to receive and/or send a signal. For example, the processor 710 is configured to control the transceiver 730 to receive and/or send a signal.

In a solution, the apparatus 700 is configured to implement operations performed by a network element in the foregoing method embodiments.

For example, the processor 710 is configured to execute the computer program or the instructions stored in the memory 720, to implement related operations in the foregoing method embodiments, for example, the method of the first node and/or the second node in the embodiment shown in FIG. 4.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM can be used as an external cache. By way of example and not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) may be integrated into the processor.

It should further be noted that the memory described in this specification is intended to include, but is not limited to, these and any other appropriate type of memory.

An embodiment of this application further provides a computer-readable storage medium. The computer-readable storage medium stores computer instructions used to implement the methods performed by the first node and/or the second node in the foregoing method embodiments.

For example, when the computer program is executed by a computer, the computer can implement the method performed by the first node and/or the second node in the foregoing method embodiments.

An embodiment of this application further provides a computer program product, including instructions. When the instructions are executed by a computer, the methods performed by the first node and/or the second node in the foregoing method embodiments are implemented.

An embodiment of this application further provides a communication system, including the foregoing first node and/or the foregoing second node.

For explanations and beneficial effect of related content of any one of the apparatuses provided above, refer to the corresponding method embodiments provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

In addition, functional units in embodiments of this application may be integrated into one processing unit, or each of the units may exist alone physically, or two or more units may be integrated into one unit.

The term "and/or" in this application is merely an association relationship for describing associated objects, and indicates that three relationships may exist. For example, A and/or B may indicate the following three cases: Only A exists, both A and B exist, and only B exists. A, B, and C each may be singular or plural. This is not limited. "A plurality of" in this application means two or more than two.

In embodiments of this application, numbers "first" and "second" are used to distinguish between same items or similar items having basically same functions and functions. A person skilled in the art can understand that "first" and "second" do not limit a quantity or a sequence, and "first", "second", and the like do not limit a necessary difference.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like. For example, the usable medium may include but is not limited to any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A power line communication method, comprising:
receiving, by a first node, a first multicast frame, wherein the first multicast frame comprises multicast member information and a payload of a multicast member, and the multicast member comprises the first node; and
sending, by the first node, response information, wherein the response information is used to determine whether one or more units in the payload are correctly received.

2. The method according to claim 1, wherein the sending, by the first node, response information comprises:
sending, by the first node, the response information at a first location, wherein the first location is determined based on a location of the first node in the multicast member information.

3. The method according to claim 1 or 2, wherein the multicast member information comprises a bitmap, and a node number of the multicast member in the multicast member information corresponds to a first bit in the bitmap.

4. The method according to claim 3, wherein
when the first bit is a first value, responding, by the first node, with acknowledgment information to the first multicast frame; and
when the first bit is a second value, skipping responding, by the first node, to the first multicast frame.

5. The method according to any one of claims 1 to 4, wherein the response information is carried on a first time domain resource, and the first time domain resource comprises one or more symbols used for channel estimation and one or more symbols used for responding.

6. The method according to any one of claims 1 to 5, wherein the response information is on a first response unit, the first response unit comprises a plurality of subcarriers, the plurality of subcarriers correspond to M groups of comb subcarriers or M groups of consecutive subcarriers, and the response information is carried on one group of subcarriers in the M groups of comb subcarriers or one group of subcarriers in the M groups of consecutive subcarriers.

7. The method according to claim 6, wherein the first location corresponds to an i^{th} group of time domain resources on time domain resources, the first location corresponds to a j^{th} group of frequency domain resources on frequency domain resources, the first node is an a^{th} node in a multicast group, and the sending, by the first node, the response information at a first location comprises:
sending, by the first node, the response information on the i^{th} group of time domain resources and the j^{th} group of frequency domain resources in the first multicast frame, wherein
a is a positive integer, i=floor (a/M), j=mod (a, M), floor represents rounding down, and mod represents modulo.

8. A power line communication method, comprising:
sending, by a second node, a first multicast frame, wherein the first multicast frame comprises multicast member information and a payload of a multicast member, and the multicast member comprises a first node; and
receiving, by the second node, response information of the first node, wherein the response information is used to determine whether one or more units in the payload are correctly received by the first node.

9. The method according to claim 8, wherein the receiving, by the second node, response information comprises:
receiving, by the second node, the response information at a first location, wherein the first location is determined based on a location of the first node in the multicast member information.

10. The method according to claim 8 or 9, wherein the multicast member information comprises a bitmap, and a node number of the multicast member in the multicast member information corresponds to a first bit in the bitmap.

11. The method according to claim 10, wherein the second node receives the response information when the first bit is a first value.

12. The method according to any one of claims 8 to 11, wherein the response information is carried on a first time domain resource, and the first time domain resource comprises one or more symbols used for channel estimation and one or more symbols used for responding.

13. The method according to any one of claims 8 to 12, wherein the response information is on a first response unit, the first response unit comprises a plurality of subcarriers, the plurality of subcarriers correspond to M groups of comb subcarriers or M groups of consecutive subcarriers, and the response information is carried on one group of subcarriers in the M groups of comb subcarriers or one group of subcarriers in the M groups of consecutive subcarriers.

14. The method according to claim 13, wherein the first location corresponds to an i^{th} group of time domain resources on time domain resources, the first location corresponds to a j^{th} group of frequency domain resources on frequency domain resources, the first node is an a^{th} node in a multicast group, and the receiving, by the second node, the response information at a first location comprises:
receiving, by the second node, the response information on the i^{th} group of time domain resources and the j^{th} group of frequency domain resources in the first multicast frame, wherein
a is a positive integer, i=floor (a/M), j=mod (a, M), floor represents rounding down, and mod represents modulo.

15. A power line communication apparatus, wherein the apparatus is an ordinary node and comprises a processor, and the processor is configured to execute a computer program or instructions stored in a memory, so that the apparatus performs the method according to any one of claims 1 to 7.

16. A power line communication apparatus, wherein the apparatus is a domain master node and comprises a processor, and the processor is configured to execute a computer program or instructions stored in a memory, so that the apparatus performs the method according to any one of claims 8 to 14.

17. A power line communication system, comprising a domain master node and at least one ordinary node, wherein the ordinary node is configured to implement the method according to any one of claims 1 to 7, and the domain master node is configured to implement the method according to any one of claims 8 to 14.
